# EUROPÄISCHE PATENTANMELDUNG

(11) **EP 1 321 574 A1**
(43) Veröffentlichungstag der Anmeldung: **25.06.2003**
(21) Anmeldenummer: 02027879.2
(22) Anmeldetag: 13.12.2002
(51) Int. Cl.: D21H 17/71, C08L 51/02, D21H 17/28

(54) **Oberflächenleimungsmittel**

(30) Priorität: 18.12.2001 DE 10161780
(71) Anmelder: Chemische Fabrik Brühl Mare GmbH, 30159 Hannover (DE)
(72) Erfinder: Phau Awie, 53919 Weilerswist (DE)
(74) Vertreter: Schreiber, Christoph, Dr.

(57) **Zusammenfassung**

Die Erfindung betrifft ein Leimungsmittel enthaltend
(A) ein Polymer erhältlich durch Umsetzung von folgenden Komponenten
   (1) abgebauter, anionischer oder nichtionischer Stärke
   (2) Styrol oder alkyliertes Styrol
   (3) Alkyl(meth)acrylat
   in wässriger Lösung,
(B) eine reaktive Aluminiumverbindung
sowie ein Verfahren zur Herstellung eines Leimungsmittels.

## Beschreibung

Die vorliegende Erfindung betrifft ein Oberflächenleimungsmittel.

Leimungsmittel verbessern die Papiereigenschaften, z.B. die Bedruck- oder Beschreibbarkeit. Es gibt zwei unterschiedliche Leimungsverfahren, die Masseund die Oberflächenleimung. Bei der Masseleimung werden der Papierfasersuspension Leimungsmittel zugesetzt, die mit geeigneten Mitteln auf der Papierfaseroberfläche fixiert werden. Dabei erhält man eine gut bedruckbare und gegen das Eindringen von Wasser widerstandsfähige Oberfläche. Bei der Oberflächenleimung wird das Leimungsmittel nachträglich mittels geeigneter Auftragsvorrichtungen auf das Papier aufgebracht. Substanzen zur Leimung und Verfahren dafür sind dem Fachmann bekannt.

Die EP 0 924 222 A1 beschreibt wässrige Emulsionspolymerisate, die erhältlich sind durch radikalisch initiierte Polymerisation von mindestens einem Monomeren in Gegenwart abgebauter Stärke und mindestens einem polymeren Emulgator aus der Reihe der sulfonsäuregruppenhaltigen Maleinsäureanhydrid-Copolymerisate und/oder der sulfonsäuregruppenhaltigen Oligourethane mit verzweigter Molekülstruktur.

Die WO 00/23479 beschreibt Leimungsmittel und Verfahren zu ihrer Herstellung, die durch Copolymerisation von Styrol und Acrylaten in Gegenwart eines Stabilisierungsmittels erhalten werden.

Die vorliegenden Erfindung hat sich die Aufgabe gestellt, ein Leimungsmittel bereitzustellen, das gegenüber den bekannten Oberflächenleimungsmitteln eine verbesserte Wasserabstoßung zeigt.

Gelöst wird die Aufgabe durch ein Leimungsmittel enthaltend

### (A) ein Polymer erhältlich durch Umsetzung von folgenden Komponenten

(1) abgebauter, anionischer oder nichtionischer Stärke
(2) Styrol oder alkyliertes Styrol
(3) Alkyl(meth)acrylat
in wässriger Lösung, und

### (B) eine reaktive Aluminiumverbindung.

Bevorzugt ist das Polymer (A) erhältlich durch die Umsetzung von
(1) 20-80 Gew% abgebauter, anionischer oder nichtionischer Stärke
(2) 10-70 Gew% Styrol oder alkyliertes Styrol
(3) 10-70 Gew% Alkyl(meth)acrylat
bezogen auf die Gesamtmenge der Komponenten (1), (2) und (3).

Es wird noch mehr bevorzugt, dass das Polymer (A) erhältlich ist durch Umsetzung von
(1) 30-80 Gew% abgebauter, anionischer oder nichtionischer Stärke
(2) 10-35 Gew% Styrol oder alkyliertes Styrol
(3) 10-35 Gew% Alkyl(meth)acrylat
bezogen auf die Gesamtmenge der Komponenten (1), (2) und (3).

Am meisten bevorzugt ist ein Polymer (1), bei dem mindestens genauso viel Stärke wie organische Monomere zum Einsatz kommen, d.h. das erhältlich ist durch Umsetzung von
(1) 50-80 Gew% abgebauter, anionischer oder nichtionischer Stärke
(2) 10-40 Gew% Styrol oder alkyliertes Styrol
(3) 10-40 Gew% Alkyl(meth)acrylat
bezogen auf die Gesamtmenge von (1), (2) und (3).

Alkyl(meth)acrylat bezeichnet die Alkylester der Acrylsäure bzw. Methacrylsäure. Erfindungsgemäss kann die Polymerisation ohne Zusatz eines Emulgators, insbesondere eines sulfonsäuregruppenhaltigen Emulgators erfolgen.

Aufgrund ihrer chemischen Struktur setzen solche Emulgatoren die Bennetzbarkeit herauf und wirken dabei der erfindungsgemäß gewünschten und verbesserten Wasserabstoßung entgegen.

Das erfindungsgemäße Mittel eignet sich insbesondere zu Oberflächenleimung, daher ist auch die Verwendung des erfindungsgemäße Leimungsmittels zur Oberflächenleimung Gegenstand der Erfindung.

Eine reaktive Aluminiumverbindung im Sinne dieser Anmeldung sind Aluminiumverbindungen, die im wässrigen löslich sind. Geeignete reaktive Aluminiumverbindungen sind beispielsweise Aluminiumsulfat, Polyaluminiumhydroxychlorid (PAC), Polyaluminiumhydroxysulfat (PAS), Aluminiumnitrat, Aluminumhydroxynitrat, Aluminiumacetat, Polyaluminiumhydroxychloridsulfat und Mischungen davon. Bezogen auf die Menge an (A) + (B), die in dem Leimungsmittel enthalten sind, liegt der Anteil der Aluminiumverbindung bevorzugt im Bereich von 1 - 20 Gew.-%.

Die erfindungsgemäß eingesetzte Stärke wird durch Abbau von Stärke erhalten. Geeignete Stärken sind z.B. aus Kartoffeln, Weizen, Mais oder Tapioka erhältlich. Der Abbau kann oxidativ, thermisch, sauer oder enzymatisch erfolgen, wobei oxidativ besonders bevorzugt wird. Hierzu sind alle Oxidationsmittel geeignet, insbesondere Peroxodisulfate, Wasserstoffperoxid oder Kombinationen davon. Die dadurch erhaltene abgebaute Stärke hat bevorzugt als wässrige 20%ige Lösung (Gew.-Anteil) eine Viskosität im Bereich von 20 bis 2000 mPa bei 25°C.

Die Viskosität wird mit einem Brookfield-Viskosimeter Spindel I, 6 U/min bei 25°C ermittelt.

Als Komponente 2 kommen insbesondere solche Monomere in Betracht, die kommerziell erhältlich sind, beispielsweise Styrol und α-Methylstyrol.

Als Komponente 3 sind ebenfalls alle technisch verfügbaren Acrylsäure- und Methacrylsäureester geeignet, beispielsweise Methyl(meth)acrylat, Ethyl-(meth)acrylat, Butyl(meth)acrylat, Propyl(meth)acrylat, 2-Ethylhexylacrylat und Mischungen davon.

In einer besonders bevorzugten Ausführungsform handelt es sich bei der Komponente 2 um Styrol und bei der Komponente 3 um Ethylacrylat oder n-Butylacrylat.

Gegenstand der vorliegenden Erfindung ist auch ein Verfahren zur Herstellung eines Leimungsmittels, wobei

### (A) abgebaute, anionische oder nichtionische Stärke

(2) Styrol oder alkyliertes Styrol
(3) Alky(meth)acrylat
in wässriger Lösung zu einem Polymer umgesetzt wird, und

### (B) eine reaktive Aluminiumverbindung zugegeben wird.

Die vorliegende Erfindung wird durch die nachfolgenden Beispiele weiter erläutert.

### Beispiel 1

In einem Reaktionskolben werden 100 g abgebaute, nichtionische Stärke, 400 g destilliertes Wasser und 5 g Ammoniumpersulfat vorgelegt. Diese Mischung wird unter Rühren bis auf eine Temperatur von 90°C erwärmt. Nach 1 Stunde wird die aufgeschlossene und weiter abgebaute Stärkelösung bis auf 60°C abgekühlt, anschließend werden eine Monomerenmischung aus 52 g Styrol, 64 g Butylacrylat und 0,75 g Eisen(II)sulfathydrat zugegeben. Unter Luftausschluss (Stickstoffatmosphäre) und weiterem Rühren wird aus einem Tropfzylinder 6 g 10%iges Wasserstoffperoxid im Laufe von 2 Stunden zudosiert. Zum Ausreagieren wird dann eine weitere Menge von 2 g 10%igem Wasserstoffperoxid zugesetzt und die Temperatur auf 75°C erhöht. Nach weiterem einstündigen Rühren werden 30 g Aluminiumsulfat (entsprechend 12,2% bezogen auf die Summe aus Stärke, Monomeren und Aluminiumverbindung) zugesetzt. Die entstandene Polymerdispersion weist einen pH-Wert von 2,5 auf.

### Vergleichsbeispiel 1

100 g kationische Maisstärke, 400 g destilliertes Wasser und 5 g Ammoniumpersulfat werden in einem Reaktionskolben für 1 Stunde auf 90°C erwärmt. Nach dem Abkühlen auf 40°C werden eine Monomermischung, bestehend aus 45 g Styrol, 60 g Butylacrylat, 10 g Methylacrylat und 0,75 g Eisen(II)sulfathydrat zugegeben. Unter Luftausschluß (Stickstoffatmosphäre) werden 6 g 10%iges Wasserstoffperoxid im Laufe von 2 Stunden zudosiert. Am Ende wird die Temperatur auf 75°C erhöht und eine weitere Menge von 2 g 10%iger Wasserstoffperoxidlösung zugesetzt. Die Polymerdispersion wird abgekühlt und mit verdünnter Natronlauge auf einen pH-Wert von 6 eingestellt.

### Vergleichsbeispiel 2

100 g kationische Maisstärke, 400 g destilliertes Wasser und 5 g Ammoniumpersulfat werden in einem Reaktionskolben für 1 Stunde auf 90°C erhitzt. Nach der Abkühlung auf 60°C werden eine Monomermischung aus 59 g Styrol und 65 g Butylacrylat und 0,75 g Eisen(II)sulfathydrat zugegeben. Unter Luftausschluß (Stickstoffatmosphäre) werden 6 g 10%iger Wasserstoffperoxidlösung im Laufe von 2 Stunden zudosiert. Schließlich werden weitere 2 g 10%iges Wasserstoffperoxid zugegeben und die Temperatur auf 75°C für 1 Stunde erhöht. Die Polymerdispersion wird abgekühlt und mit verdünnter Natronlauge auf einen pH-Wert von 6 eingestellt.

### Vergleichsbeispiel 3

In einem Reaktionskolben werden 100 g abgebaute, nichtionische Stärke, 400 g destilliertes Wasser und 5 g Ammoniumpersulfat vorgelegt. Diese Mischung wird unter Rühren bis auf eine Temperatur von 90°C erwärmt. Nach 1 Stunde wird die aufgeschlossene und weiter abgebaute Stärkelösung bis auf 60°C abgekühlt, anschließend werden eine Monomermischung aus 52 g Styrol, 64 g Butylacrylat und 0,75 g Eisen(II)sulfathydrat zugegeben. Unter Luftausschluss (Stickstoffatmosphäre) und weiterem Rühren wird aus einem Trichter 6 g 10% Wasserstoffperoxid im Laufe von 2 Stunden zudosiert. Zum Ausreagieren wird dann eine weitere Menge von 2 g 10%igen Wasserstoffperoxid zugesetzt und die Temperatur auf 75°C erhöht. Nach weiterem einstündigen Rühren wird die entstandene Polymerdispersion abgekühlt.

### Oberflächenleimung

In einem Becherglas werden 6 g enzymatisch abgebaute Stärke mit 100 ml Wasser durch Erwärmen aufgelöst. Hierzu werden 0,5, 0,75 bzw. 1 g der Polymerdispersion gemäß den Beispielen zugesetzt. Die Temperatur beträgt 70°C. Ein ungeleimtes Papier aus gebleichtem Zellstoff oder Altpapier mit einem Flächengewicht von 80 g und einer Fläche von 15 mal 15 cm wird als Prüfpapier in diese Lösung eingetaucht und anschließend durch die Schlitze einer Gummiwalze gepresst. Das abgepresste Prüfpapier wird anschließend in einem Kontakttrockner bei 110°C 8 Minuten lang getrocknet.

Nach der Abkühlung wird das Prüfpapier mit einem Cobb-Tester auf die Leimung geprüft. Cobb-Werte sind definiert als die Wasseraufnahme innerhalb einer Benetzungszeit von 60 Sekunden, angegeben in g/m² (vgl. DIN 53122). Je niedriger der Cobb-Wert desto besser die Leimung.

**Tabelle**

| Produkt | Einsatzmenge g | Leimung Cobb₆₀ Zellstoffpapier | Leimung Cobb₆₀ Altpapier |
|---|---|---|---|
| Beispiel 1 | 0,50 | 30 | 45 |
| Beispiel 1 | 0,75 | 25 | 37 |
| Beispiel 1 | 1,00 | 19 | 29 |
| Vergleichsbeispiel 1 | 0,50 | 37 | 65 |
| Vergleichsbeispiel 1 | 0,75 | 31 | 57 |
| Vergleichsbeispiel 1 | 1,00 | 28 | 42 |
| Vergleichsbeispiel 2 | 0,50 | 39 | 68 |
| Vergleichsbeispiel 2 | 0,75 | 33 | 60 |
| Vergleichsbeispiel 2 | 1,00 | 30 | 45 |
| Vergleichsbeispiel 3 | 0,50 | 38 | 67 |
| Vergleichsbeispiel 3 | 0,75 | 32 | 59 |
| Vergleichsbeispiel 3 | 1,00 | 29 | 44 |

Es zeigt sich, dass das erfindungsgemäße Produkt eine bessere Leimungswirkung (niedrigere Cobb₆₀-Werte) aufweist als die Vergleichsbeispiele.

## Patentansprüche

1. Oberflächenleimungsmittel enthaltend
(A) ein Polymer erhältlich durch Umsetzung von folgenden Komponenten
(1) abgebauter, anionischer oder nichtionischer Stärke
(2) Styrol oder alkyliertes Styrol
(3) Alkyl(meth)acrylat
in wässriger Lösung,
(B) eine reaktive Aluminiumverbindung.

2. Oberflächenleimungsmittel nach Anspruch 1, **dadurch gekennzeichnet, dass** das Polymer (A) erhältlich ist durch Umsetzung von
(1) 20-80 Gew% abgebauter, anionischer oder nichtionischer Stärke
(2) 10-70 Gew% Styrol oder alkyliertes Styrol
(3) 10-70 Gew% Alkyl(meth)acrylat
bezogen auf die Gesamtmenge der Komponenten (1), (2) und (3).

3. Oberflächenleimungsmittel nach Anspruch 2, **dadurch gekennzeichnet, dass** das Polymer (A) erhältlich ist durch Umsetzung von
(1) 50-80 Gew% abgebauter, anionischer oder nichtionischer Stärke
(2) 10-40 Gew% Styrol oder alkyliertes Styrol
(3) 10-40 Gew% Alkyl(meth)acrylat
bezogen auf die Gesamtmenge von (1), (2) und (3).

4. Oberflächenleimungsmittel nach mindestens einem der Ansprüche 1 bis 3, **dadurch gekennzeichnet, dass** die Menge an reaktiven Aluminiumverbindung (B), bezogen auf die Menge an (A) + (B) 1-20 Gew% beträgt.

5. Oberflächenleimungsmittel nach mindestens einem der Ansprüche 1 bis 4, **dadurch gekennzeichnet, dass** die reaktive Aluminiumverbindung ausgesucht wird aus der Gruppe bestehend aus Aluminiumsulfat, Polyaluminiumhydroxychlorid (PAC), Polyaluminiumhydroxysulfat (PAS), Aluminiumnitrat, Aluminumhydroxynitrat, Aluminiumacetat, Polyaluminiumhydroxychloridsulfat.

6. Oberflächenleimungsmittel nach mindestens einem der Ansprüche 1 bis 5, **dadurch gekennzeichnet, dass** die abgebaute Stärke durch Abbau von Stärke mit Enzymen oder chemische Oxidation erhältlich ist.

7. Oberflächenleimungsmittel nach mindestens einem der Ansprüche 1 bis 6, **dadurch gekennzeichnet, dass** die Komponente (2) ausgewählt ist aus der Gruppe Styrol, α-Methylstyrol und Mischungen davon.

8. Oberflächenleimungsmittel nach mindestens einem der Ansprüche 1 bis 7, **dadurch gekennzeichnet, dass** die Komponente (3) ausgewählt ist aus der Gruppe Methyl(meth)acrylat, Ethyl(meth)acrylat, Butyl(meth)acrylat, Propyl(meth)acrylat, 2-Ethylhexylacrylat und Mischungen davon.

9. Oberflächenleimungsmittel nach mindestens einem der Ansprüche 1 bis 8, **dadurch gekennzeichnet, dass** die Komponente (2) Styrol und die Komponente (3) Butylacrylat ist.

10. Verfahren zur Herstellung eines Obeflächenleimungsmittel, **dadurch gekennzeichnet, dass**
(A)
(1) abgebaute, anionische oder nichtionische Stärke
(2) Styrol oder alkyliertes Styrol
(3) Alkyl(meth)acrylat
in wässriger Lösung zu einem Polymer umgesetzt wird, und
(B) eine reaktive Aluminiumverbindung zugegeben wird.
